# EUROPEAN PATENT APPLICATION

(11) **EP 4 808 268 A1**
(43) Date of publication of application: **16.09.2026**
(21) Application number: 24904075.9
(22) Date of filing: 26.11.2024
(51) Int. Cl.: H04W 76/19, H04W 12/03, H04W 12/04, H04W 12/73, H04L 9/40, H04B 17/318, H04W 4/70, H04W 4/80, H04L 9/08

(54) **ELECTRONIC DEVICE AND OPERATION METHOD THEREOF**

(30) Priority: 13.12.2023 KR 20230181306; 12.03.2024 KR 20240034583
(71) Applicant: Samsung Electronics Co., Ltd., Suwon-si, Gyeonggi-do 16677 (KR)
(72) Inventor: OH, Juhee, Suwon-si Gyeonggi-do 16677 (KR); KIM, Kihun, Suwon-si Gyeonggi-do 16677 (KR); WOO, Hyungduck, Suwon-si Gyeonggi-do 16677 (KR)
(74) Representative: Gulde & Partner
(86) International application number: PCT/KR2024/018878
(87) International publication number: WO 2025/127510

(57) **Abstract**

An electronic device according to one embodiment of the present disclosure may comprise at least one communication circuit, at least one processor, and a memory. The memory may store instructions that, when executed by the processor, cause the electronic device to: establish a network connection via a first AP by using a first communication protocol; in response to identifying that the network connection via the first AP is terminated, transmit a first packet by using a second communication protocol; in relation to the transmission of the first packet, receive at least one second packet by using the second communication protocol; and, on the basis of a network identifier and a network password identified on the basis of the at least one second packet, transmit a network connection request to a second AP by using the first communication protocol. The first packet can include identification information about the electronic device, and a network connection request indicator. The at least one second packet can include network connection information corresponding to a network identifier and/or a network password associated with the second AP and can be encrypted using an encryption key.

## Description

### [Technical Field]

The embodiments disclosed in this document relate to an electronic device and a method of operating an electronic device.

### [Background Art]

With the development of Internet of Things (IoT) technology, a user is able remotely control various kinds of IoT devices (e.g., a smart TV, an air purifier, an air conditioner, a refrigerator, or a washing machine) via a control device (e.g., a smart phone). A user device and the IoT devices may communicate data using short-range wireless communication technology (e.g., Bluetooth, near field communication (NFC)) and may be connected to an IoT server via an access point (AP) to form a local area network (LAN) (e.g., a Wi-Fi (WiFi) network). An IoT device may use a plurality of networks, and for connection to a network, a network identifier (e.g., a service set identifier (SSID)) and a network password may be used for each network.

### [Disclosure of Invention]

### [Solution to Problems]

In case the location of an IoT device is changed (e.g., the device moves to another location where it cannot receive a signal from an AP) or an access point (AP) is changed (e.g., network connection information is changed), the IoT device may perform a procedure for reconnection with the AP. In this regard, in case a plurality of IoT devices exist within an IoT environment, all of the electronic devices must individually perform reconnection for each device in order to be connected to a network, a protocol for efficient reconnection between the IoT device and the AP may be required.

Based on the discussion described above, the disclosure provides an apparatus and a method for an IoT device to perform a connection with a network quickly and safely.

An electronic device according to an embodiment of the disclosure may comprise at least one communication unit, a memory, and at least one processor electrically connected to the communication unit and the memory. The processor may establish a network connection via a first AP using a first communication protocol. The processor may, in response to identifying that the network connection via the first AP is terminated, transmit a first packet using a second communication protocol. The processor may, in connection with transmitting the first packet, receive at least one second packet using the second communication protocol. The processor may, based on a network identifier and a network password that are identified based on at least one second packet, transmit a network connection request to a second AP using the first communication protocol. The first packet may comprise identification information of the electronic device, and a network connection request indicator. At least one second packet may comprise network connection information corresponding to the network identifier and/or the network password associated with the second AP and may be encrypted using an encryption key.

A method of operating an electronic device according to an embodiment of the disclosure may comprise at least one operation. At least one operation may comprise an operation of establishing a network connection via a first AP using a first communication protocol. At least one operation may comprise an operation of, in response to identifying that the network connection via the first AP is terminated, transmitting a first packet. At least one operation may comprise an operation of, in connection with transmitting the first packet, receiving at least one second packet using the second communication protocol. At least one operation may comprise an operation of, based on a network identifier and a network password that are identified based on at least one second packet, transmitting a network connection request to a second AP using the first communication protocol. The first packet may comprise identification information of the electronic device, and a network connection request indicator. At least one second packet may comprise network connection information corresponding to the network identifier and/or the network password associated with the second AP and may be encrypted using an encryption key.

An electronic device according to an embodiment of the disclosure may comprise at least one communication unit, at least one processor, and a memory. The memory may store instructions that, in case executed by the processor, cause the electronic device to perform at least one operation. At least one operation may comprise an operation of establishing a network connection via a first AP using a first communication protocol. At least one operation may comprise an operation of, in response to identifying that the network connection via the first AP is terminated, transmitting a first packet. At least one operation may comprise an operation of, in connection with transmitting the first packet, receiving at least one second packet using the second communication protocol. At least one operation may comprise an operation of, based on a network identifier and a network password that are identified based on at least one second packet, transmitting a network connection request to a second AP using the first communication protocol. The first packet may comprise identification information of the electronic device, and a network connection request indicator. At least one second packet may comprise network connection information corresponding to the network identifier and/or the network password associated with the second AP and may be encrypted using an encryption key.

In a storage medium storing at least one computer-readable instruction according to an embodiment of the disclosure, at least one instruction, in case executed by at least one processor of an electronic device, may cause the electronic device to perform at least one operation. At least one operation may comprise an operation of establishing a network connection via a first AP using a first communication protocol. At least one operation may comprise an operation of, in response to identifying that the network connection via the first AP is terminated, transmitting a first packet. At least one operation may comprise an operation of, in connection with transmitting the first packet, receiving at least one second packet using the second communication protocol. At least one operation may comprise an operation of, based on a network identifier and a network password that are identified based on at least one second packet, transmitting a network connection request to a second AP using the first communication protocol. The first packet may comprise identification information of the electronic device and a network connection request indicator. At least one second packet may comprise network connection information corresponding to the network identifier and/or the network password associated with the second AP and may be encrypted using an encryption key.

An electronic device according to an embodiment of the disclosure may comprise at least one communication unit, a memory, and at least one processor electrically connected to the communication unit and the memory. The processor may receive, from an external electronic device that has established a network connection via a first AP using a first communication protocol, a first packet using a second communication protocol. The processor may, in response to identifying that a change of an AP is needed, transmit at least one second packet to the external electronic device using the second communication protocol. The external electronic device may be configured to transmit a network connection request to a second AP using the first communication protocol, based on a network identifier and a network password that are identified based on at least one second packet. The first packet may comprise identification information of the electronic device, and a network connection request indicator. At least one second packet may comprise network connection information corresponding to the network identifier and/or the network password associated with the second AP and may be encrypted using an encryption key.

A method of an electronic device according to an embodiment of the disclosure may comprise at least one operation. At least one operation may receive, from an external electronic device that has established a network connection via a first AP using a first communication protocol, a first packet using a second communication protocol. At least one operation may, in response to identifying that a change of an AP is needed, transmit at least one second packet to the external electronic device using the second communication protocol. The external electronic device may be configured to transmit a network connection request to a second AP using the first communication protocol, based on a network identifier and a network password that are identified based on at least one second packet. The first packet may comprise identification information of the electronic device, and a network connection request indicator. At least one second packet may comprise network connection information corresponding to the network identifier and/or the network password associated with the second AP and may be encrypted using an encryption key.

An electronic device according to an embodiment of the disclosure may comprise at least one communication unit, at least one processor, and a memory. The memory may store instructions that, in case executed by the processor, cause the electronic device to perform at least one operation. At least one operation may receive, from an external electronic device that has established a network connection via a first AP using a first communication protocol, a first packet using a second communication protocol. At least one operation may, in response to identifying that a change of an AP is needed, transmit at least one second packet to the external electronic device using the second communication protocol. The external electronic device may be configured to transmit a network connection request to a second AP using the first communication protocol, based on a network identifier and a network password that are identified based on at least one second packet. The first packet may comprise identification information of the electronic device, and a network connection request indicator. At least one second packet may comprise network connection information corresponding to the network identifier and/or the network password associated with the second AP and may be encrypted using an encryption key.

In a storage medium storing at least one computer-readable instruction according to an embodiment of the disclosure, at least one instruction, in case executed by at least one processor of an electronic device, may cause the electronic device to perform at least one operation. At least one operation may comprise an operation of receiving, from an external electronic device that has established a network connection via a first AP using a first communication protocol, a first packet using a second communication protocol. At least one operation may comprise an operation of, in response to identifying that a change of an AP is needed, transmitting at least one second packet to the external electronic device using the second communication protocol. The external electronic device may be configured to transmit a network connection request to a second AP using the first communication protocol, based on a network identifier and a network password that are identified based on at least one second packet. The first packet may comprise identification information of the electronic device and a network connection request indicator. At least one second packet may comprise network connection information corresponding to the network identifier and/or the network password associated with the second AP and may be encrypted using an encryption key.

The embodiments of the disclosure provide an effect of an electronic device, which has been disconnected from a network, to quickly reconnected to the network.

In addition, the embodiments of the disclosure provide an effect that connection can be safely performed by transferring network connection information to an electronic device via an encrypted packet.

The effects obtainable from the disclosure are not limited to the effects mentioned in the various embodiments, and other effects not mentioned may be clearly understood by those of ordinary skill in the art to which the disclosure pertains from the description below.

### [Brief Description of Drawings]

FIG. 1 is a block diagram illustrating an electronic device in a network environment according to various embodiments of the disclosure.
FIG. 2 illustrates an example of a network environment according to an embodiment of the disclosure.
FIG. 3 illustrates a signaling flow of devices in a network environment according to an embodiment of the disclosure.
FIG. 4 illustrates an example of a first packet according to an embodiment of the disclosure.
FIG. 5 illustrates an example of network connection information according to an embodiment of the disclosure.
FIG. 6 illustrates an operation flow of an electronic device according to an embodiment of the disclosure.
FIG. 7 illustrates an operation flow of a control device according to an embodiment of the disclosure.
FIG. 8 illustrates a signaling flow of a first electronic device and a second electronic device according to an embodiment of the disclosure.
FIG. 9 illustrates an example of a network environment according to an embodiment of the disclosure.
FIG. 10 illustrates an operation flow of an electronic device according to an embodiment of the disclosure.
FIG. 11 illustrates an operation flow of an electronic device according to an embodiment of the disclosure.
FIG. 12 illustrates an operation flow of an electronic device according to an embodiment of the disclosure.
FIG. 13 illustrates an operation flow of an electronic device according to an embodiment of the disclosure.

In relation to the description of the drawings, the same or similar reference signs may be used for the same or similar components.

### [Mode for the Invention]

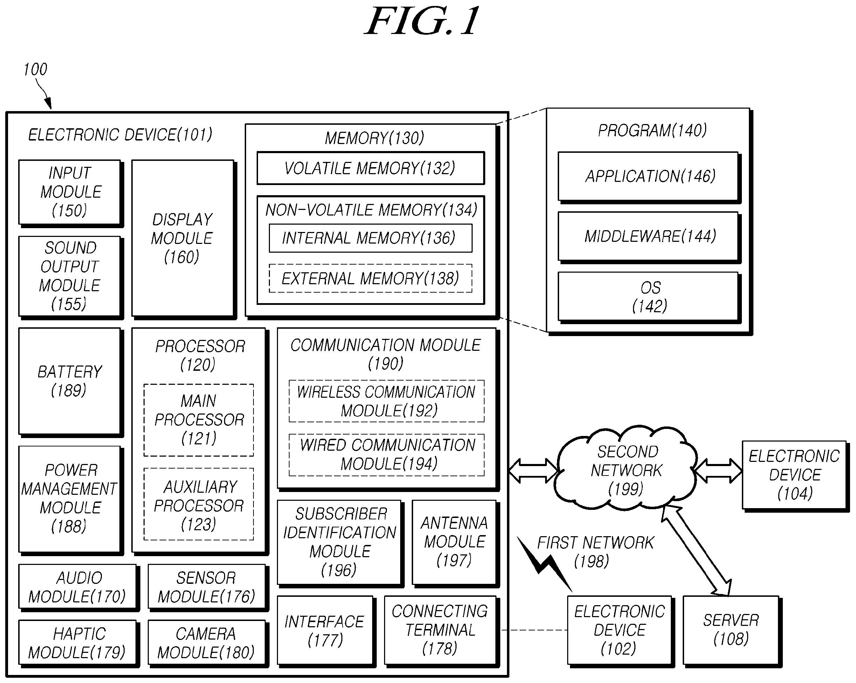

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation.

According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134.

According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

According to an embodiment, the auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123.

According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

According to an embodiment, the memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

According to an embodiment, the program 140 may be stored in the memory 130 as software, and may include, for example, an operating system (OS) 142, middleware 144, or an application 146.

According to an embodiment, the input 1module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

According to an embodiment, the sound output 1module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

According to an embodiment, the display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

According to an embodiment, the audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

According to an embodiment, the sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

According to an embodiment, the interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

According to an embodiment, a connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

According to an embodiment, the haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

According to an embodiment, the camera module 180 may capture a still image or moving images. According to an embodiment, the camera module 180 may include one or more lenses, image sensors, image signal processors, or flashes.

According to an embodiment, the power management module 188 may manage power supplied to the electronic device 101. According to one embodiment, the power management module 188 may be implemented as at least part of, for example, a power management integrated circuit (PMIC).

According to an embodiment, the battery 189 may supply power to at least one component of the electronic device 101. According to an embodiment, the battery 189 may include, for example, a primary cell which is not rechargeable, a secondary cell which is rechargeable, or a fuel cell.

According to an embodiment, the communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication.

According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

According to an embodiment, the wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199).

According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

According to an embodiment, the antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)).

According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

According to an embodiment, at least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101.

According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing.

According to an embodiment, the external electronic device 104 may include an internet-of-things (IoT) device.

According to an embodiment, the server 108 may be an intelligent server using machine learning and/or a neural network.

According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

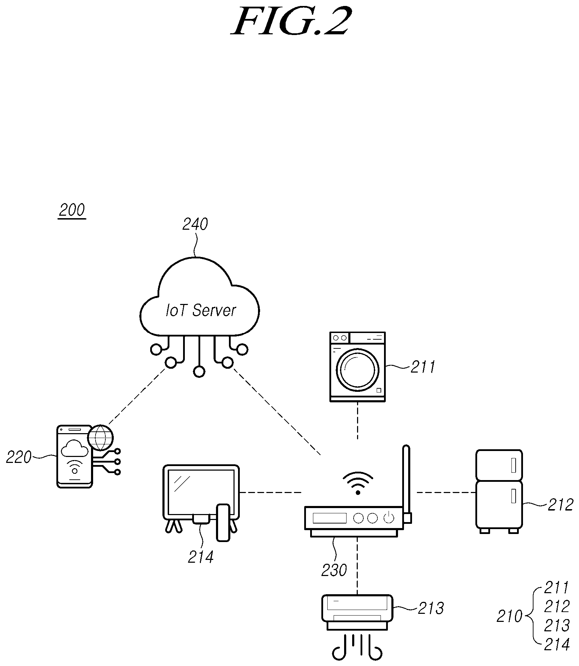

FIG. 2 illustrates an example of a network environment according to an embodiment.

According to an embodiment, the network environment 200 may include IoT device 210 (e.g., IoT device 211, 212, 213, 214), a control device 220, an AP 230, and/or an IoT server 240.

According to an embodiment, the IoT server 240 may include a server device capable of managing IoT devices and distributing, collecting, processing, and/or storing data via computing in order to provide services requested by the IoT devices.

According to an embodiment, the control device 220 may include a device corresponding to the electronic device 100 of FIG. 1.

According to an embodiment, the control device 220 may include a device capable of controlling the IoT device 210 included in the network environment 200. In FIG. 2 and the following description, the control device 220 will be described by way of example as being a user device (e.g., a smart phone), but this is merely an example, and embodiments of the disclosure are not limited thereto. In other words, the control device 220 may include a device having the authority and capability to control the IoT device 210 included in the network environment 200. In the following description, the control device 220 may also be referred to as a "user device."

According to an embodiment, the IoT device 210 may include an electronic device included in the network environment 200 and connected to the IoT server 240 to be capable of processing data. The IoT device 210 may include a device capable of not only performing the original function of the device (e.g., washing machine - washing, refrigerator - refrigeration, TV - screen display) but also receiving and processing data necessary for the device to perform a function from another device or an IoT server. The IoT device 210 may include a communication unit for communicating data generated and processed in the course of performing a function.

According to an embodiment, the IoT device 210 may include a smart washing machine (or dryer) 211, a smart refrigerator 212, a smart air conditioner 213, and a smart TV 214. Referring to FIG. 2, four (4) IoT devices 210 are illustrated, but this is merely an example, and more or fewer IoT devices may be included in the network environment 200.

According to an embodiment, the IoT device 210 may communicate data with each other using a short-range wireless communication technology (e.g., Bluetooth, NFC).

According to an embodiment, the IoT device 210 may be remotely controlled by the control device 220. For example, a control signal transmitted from the control device 220 may be delivered via the AP 230 or directly to the IoT device 210, so that the IoT device 210 is controlled. For example, the control device 220 may remotely control the IoT device 210 via the IoT server 240. In the following description, the IoT device 210 will be described by way of example as a smart device connected to a network, but this is merely an example, and the IoT device 210 may include a device connected to the network (authentication completed) via the AP 230. For example, the IoT device 210 may include a user device (e.g., a smartphone, a tablet PC, a wearable device).

According to an embodiment, the AP 230 may include a device that enables devices to be connected to a computer network using related standards using Wi-Fi.

According to an embodiment, the AP 230 may relay data between a wireless device and a wired device on a network. However, the AP 230 is not limited thereto and may also relay data between wired devices or relay data between wireless devices. Meanwhile, the AP 230 may also be referred to as a relay device.

According to an embodiment, the AP 230 may connect the IoT device 210 and the control device 220 with the IoT server 240.

According to an embodiment, the AP 230 may transmit data received from the IoT server 240 to the IoT device 210 and/or the control device 220. Further, the AP 230 may transmit data received from the IoT device 210 and/or the control device 220 to the IoT server 240.

According to an embodiment, the AP 230 may broadcast a reference signal (e.g., a beacon frame) according to a predetermined period.

According to an embodiment, in case the AP 230 receives a connection request from the IoT device 210, the AP 230 may connect the IoT device 210 and the IoT server 240 based on network connection information (e.g., a network identifier and/or a network password) included in the connection request.

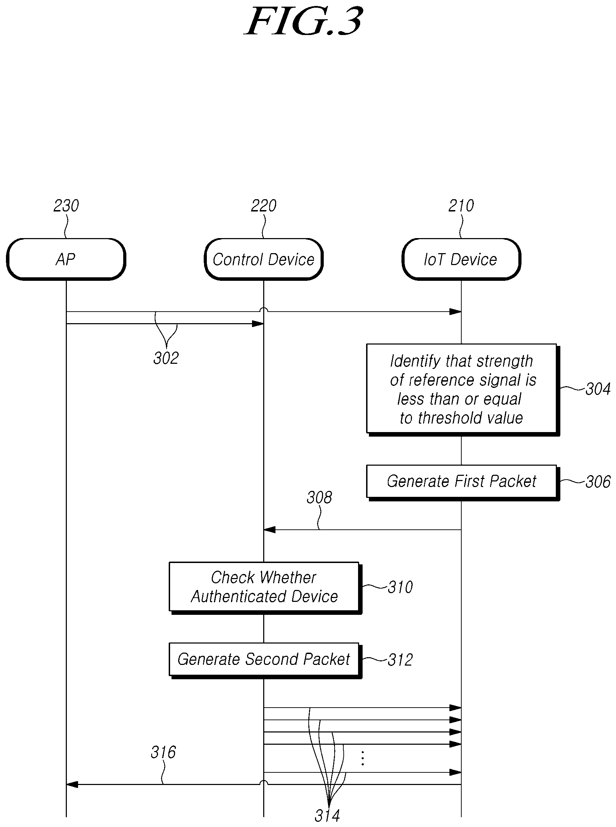

FIG. 3 illustrates a signaling flow of devices in a network environment according to an embodiment.

According to an embodiment, in operation 302, the AP 230 may transmit a signal to the control device 220 and the IoT device 210. For example, the AP 230 may transmit a signal received from the IoT server 240 to the control device 220 and the IoT device 210.

According to an embodiment, the AP 230 may broadcast a reference signal. The reference signal may include a beacon frame. For example, the IoT device 210 and the control device 220 may scan the beacon frame broadcast from the AP 230. Although not illustrated in the drawing, the network environment 200 may include a plurality of APs (e.g., the AP 230). The IoT device 210 and the control device 220 may identify the strength of the reference signal sensed via scanning and may preferentially perform connection with the AP (e.g., the AP 230) having the strongest signal strength.

According to an embodiment, the IoT device 210 may transmit a probe request frame to the AP 230, and the AP 230 may receive a probe response frame in response thereto.

According to an embodiment, the control device 220 and the IoT device 210 may scan a reference signal received from the AP 230, identify the presence of the AP 230, and request connection with the AP 230. In the following description, the IoT device 210 and the AP 230 will be described by way of example as having been previously connected, but this is merely an example, and embodiments of the disclosure may be applied even in a case where the IoT device 210 has not been connected to a network (e.g., the second network 199 of FIG. 1) via the AP 230.

According to an embodiment, the reference signal may include a signal that the IoT device 210 transmits to adjacent devices based on a predetermined period. For example, the reference signal may include a beacon frame.

According to an embodiment, the AP 230 may transmit the reference signal to the IoT device 210 and/or the control device 220 in a broadcast manner.

According to an embodiment, the reference signal may include connection information of the AP 230 and the IoT device 210. The IoT device 210 may identify that the reference signal has been transmitted from the AP 230 based on the connection information of the AP 230 and the IoT device 210.

According to an embodiment, the reference signal may include a beacon response frame transmitted in response to a request by the IoT device 210. For example, the IoT device 210 may transmit a probe request frame for connection to the network. The AP 230, which has received the probe request frame from the IoT device 210, may transmit a probe response frame to the IoT device 210.

According to an embodiment, the control device 220 may transmit to the IoT device 210a fourth packet to inform of a change in network connection information. The IoT device 210 may transmit a first packet to the control device 220 in response to receiving the fourth packet. The fourth packet may include an indicator to inform of the change in the network connection information.

According to an embodiment, the IoT device 210 may measure the strength of the reference signal broadcast from the AP 230. For example, the IoT device 210 may measure a received signal strength indicator (RSSI) of the reference signal.

According to an embodiment, in operation 304, the IoT device 210 may monitor whether the strength of the reference signal (e.g., RSSI) is less than or equal to a predetermined value.

According to an embodiment, the IoT device 210 may monitor whether reconnection with the AP 230 is needed. In case the IoT device 210 does not receive a signal from the AP 230 (e.g., in case the reference signal is not received for a predetermined time) or in case the strength of the signal received from the AP 230 is less than or equal to a predetermined value (e.g., in case the strength of the received reference signal is less than or equal to a predetermined value), the IoT device 210 may determine that reconnection with the AP 230 is needed.

According to an embodiment, the IoT device 210 may identify that the strength of the signal received from the AP 230 is less than or equal to a first threshold value. In case the position of the AP 230 or the IoT device 210 is changed and moves to a position where signals cannot be exchanged with each other or in case the AP 230 is changed (e.g., the network connection information is changed), the IoT device 210 may not receive the reference signal from the AP 230. Alternatively, the strength of the signal that the IoT device 210 receives from the AP 230 may decrease to be less than or equal to a predetermined value.

According to an embodiment, in case the IoT device 210 does not receive a reference signal from the AP 230 for a predetermined time or longer (including a case where the period of time the strength of the reference signal remains at or below a predetermined value is greater than or equal to a predetermined time), the IoT device 210 may determine that reconnection with the AP 230 is needed. Since it is not necessary to perform reconnection of the AP 230 and the IoT device 210 in a case where a signal is not received due to temporary interference between the AP 230 and the IoT device 210, the IoT device 210 may determine that reconnection of the AP 230 and the IoT device 210 is needed (a change of the AP 230 is needed) in case where the period of time during which the reference signal is not received or is weakly received equals or exceeds a predetermined time.

According to an embodiment, in operation 306, the IoT device 210 may generate a first packet. The first packet may include a Bluetooth low energy (BLE) advertising packet.

According to an embodiment, the IoT device 210 may generate the first packet in response to identifying that a strength of a reference signal is less than or equal to a predetermined value.

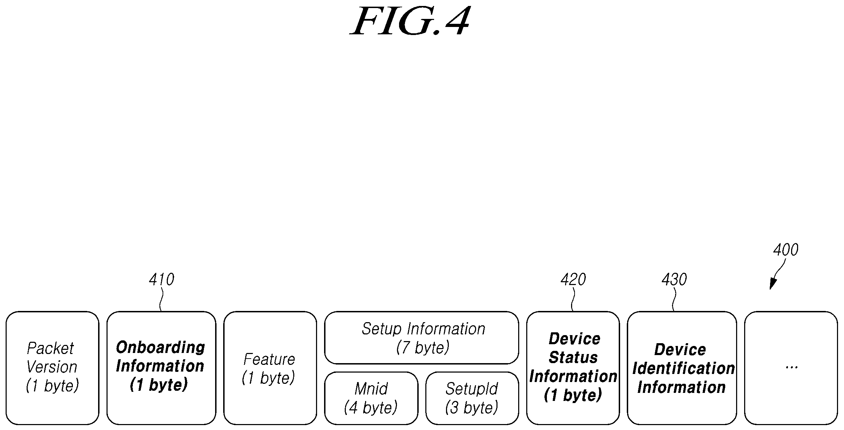

FIG. 4 illustrates an example of the first packet according to an embodiment.

According to an embodiment, the first packet 400 may include a BLE advertising packet. The BLE advertising packet may include various information about an AP (e.g., the AP 230), an IoT device (e.g., the IoT device 210), a network (e.g., the network environment 200), and/or a surrounding channel environment.

Referring to FIG. 4, according to an embodiment, the first packet 400 may include packet version information, onboarding information 410, feature information, setup information, device status information 420, and/or device ID information 430. The setup info may include information about the manufacturer of the IoT device (MnID) and/or information about the type of the IoT device (SetupID).

According to an embodiment, the onboarding information 410 may include information about a connection history between the AP 230 and the IoT device 210. The onboarding information 410 may include information indicating whether the IoT device 210 has been connected to the AP 230. In other words, the onboarding information 410 may include information indicating whether an owner of the IoT device 210 exists. For example, the onboarding information 410 may include information indicating whether the IoT device 210 is an owned device (e.g., a device owned by an account of the control device 220).

According to an embodiment, the onboarding information 410 may include information about a time point at which the IoT device 210 is connected to the network via the AP 230, an identifier of the network (e.g., SSID), and/or a network password .

According to an embodiment, the device status information 420 may include information about the connection status of a device. For example, the device status information may include a network connection request indicator (e.g., AP connection required) indicating whether the IoT device 210 needs a connection to the network. The network connection request indicator may indicate that a connection to the network is needed or indicate that a connection to the network is not needed.

According to an embodiment, the first packet 400 may include device identification information 430 for identifying a device. For example, the first packet 400 may include the device identification information 430 including all or part of a serial number of the IoT device 210.

According to an embodiment, in operation 308, the IoT device 210 may transmit the first packet to the control device 220.

According to an embodiment, the control device 220 may include a device paired with the IoT device 210.

According to an embodiment, the IoT device 210 may transmit the first packet to the control device 220 using a short-range wireless communication technology (e.g., Bluetooth).

According to an embodiment, in operation 310, the control device 220 may determine whether the IoT device 210 is an authenticated device. The operation of determining whether it is an authenticated device may include an operation of determining whether the IoT device 210 is a device that is connected to the same network as the control device 220 and which can be controlled by the control device 220.

According to an embodiment, although not illustrated in the drawings, the control device 220 may perform a connection with the AP 230. In case reconnection between the IoT device 210 and the AP 230 is required due to a movement of a position of the AP 230, a separate connection between the control device 220 and the AP 230 may not be required, but in case the AP 230 itself is changed (e.g., change of the network), a connection process between the control device 220 and the AP 230 may be performed in advance.

According to an embodiment, although not illustrated in the drawings, the control device 220 may determine whether the IoT device 210 is a device that has been previously connected, based on the onboarding information 410 included in the first packet 400 received from an IoT server or an AP. The onboarding information 410 may include information about a device that is being connected to a network via an AP or has been connected thereto.

According to an embodiment, the control device 220 may determine whether reconnection of the IoT device 210 is required based on the first packet. In case the first packet includes information indicating that the IoT device needs reconnection to the AP (e.g., the network connection request indicator of the device status information 420), it may be determined that reconnection of the IoT device is required.

According to an embodiment, the control device 220 may determine whether the IoT device 210 is an authenticated device based on the first packet. For example, the control device 220 may determine whether the IoT device 210 is an authenticated device based on whether a serial number of a device included in the first packet is stored in the control device 220 or an IoT server (e.g., the IoT server 240). In case the device identification information 430 of the IoT device 210 is included in the first packet, the control device 220 may determine that the IoT device 210 is an authenticated device. In case the device identification information of the IoT device 210 is not included in the first packet, the control device 220 may determine that the IoT device 210 is an unauthenticated device.

According to an embodiment, the control device 220 may generate network connection information. The control device 220 may generate network connection information for the IoT device 210 in response to identifying that the IoT device 210 is an authenticated device.

According to an embodiment, the network connection information may include a network identifier (e.g., SSID), and/or a network password.

According to an embodiment, the control device 220 may generate encrypted network connection information. The second packet and/or the network connection information included in the second packet may be encrypted via a secret key.

According to an embodiment, although not illustrated in the drawings, the IoT device 210 may receive the secret key from a network upon its first connection to the network. The IoT device 210 may be connected to the network 200 via the AP 230 before operation 304 is performed. After the IoT device 210 is connected to the network 200 via the AP 230, the IoT device 210 may receive the secret key from the network 200. In other words, the secret key may include a value that is exchanged at a specific point in time after the connection between the IoT device 210 and the network 200.

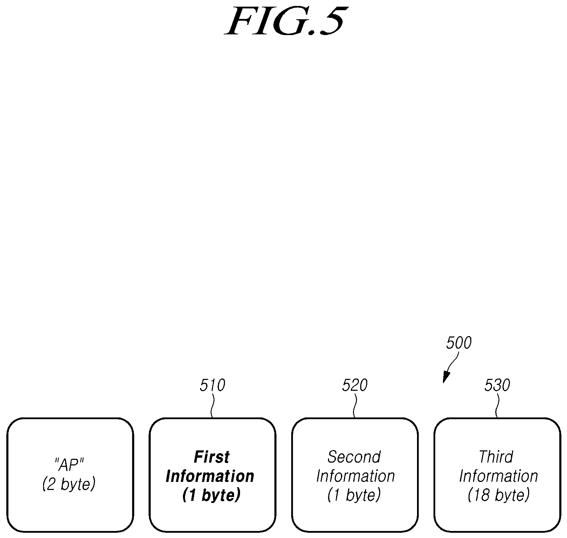

FIG. 5 illustrates an example of the network connection information according to an embodiment.

Referring to FIG. 5, according to an embodiment, the second packet 500 may include first information 510, second information 520, and third information 530. In the following description, the network connection information will be described as an example of constituting a part of the BLE advertising packet and will be described as an example of having a length of 22 bytes.

**[Table 1]**

| Network Identifier (0) | Before Encryption | mySsidIsNewAp | |
|---|---|---|---|
| | After Encyption | Second Information | Third Information |
| | | 32 byte (0x1A) | 34 35 63 62 62 35 64 61 38 36 64 30 35 39 62 37 66 38 64 32 38 30 39 65 62 30 30 66 61 65 62 65 |

| Network Password (1) | Before Encryption | myPasswordIsNewPassword | |
|---|---|---|---|
| | After Encyption | Second Information | Third Information |
| | | 64 byte (0x34) | 39 61 38 38 38 63 32 63 61 39 63 32 39 31 33 65 62 34 37 33 62 35 36 39 39 34 32 65 63 64 37 65 39 37 34 64 30 37 36 32 38 66 30 64 32 34 36 31 65 30 33 32 37 39 38 36 32 61 63 37 35 30 37 35 |

According to an embodiment, the first information 510 may include a network connection information indicator. The network connection information indicator may indicate any one of a network identifier or a network password. For example, referring to Table 1, in case the network connection information indicator of the second packet 500 has a value of 0, the network connection information of the second packet 500 may be identified as a network identifier (e.g., mySSidIsNewAP). In case the network connection information indicator of the second packet 500 has a value of 1, the network connection information of the second packet 500 may include a network password (e.g., myPasswordIsNewPassowrd). According to an embodiment, the control device 220 may obtain an encrypted hex value by encrypting the network connection information using a secret key (e.g., AES 256, CBC).

According to an embodiment, the second information 520 may include information about the length of the network connection information. For example, referring to Table 1, the encrypted network identifier may have a length of 32 bytes, and the second information 520 may include information about the length of 32 bytes.

According to an embodiment, the third information 530 may include network data. The network data may include actual data values (bit values). For example, referring to Table 1, the third information 530 may include actual data values (e.g., at least a part of network identifier data or network password data).

According to an embodiment, in operation 312, the control device 220 may generate a second packet. The second packet may include the generated network connection information (e.g., the first information 510, the second information 520, and the third information 530).

According to an embodiment, the first information 510 may include a value indicating an order of packets. For example, in case the packet includes information about a network identifier and is a first packet, the first information 510 may have a value of "00000001." For example, in case the packet includes information about a network identifier and is a second packet, the first information 510 may have a value of "00000010." For example, in case the packet includes information about a network password and is a first packet, the first information 510 may have a value of "10000001." For example, in case the packet includes information about a network password and is a second packet, the first information 510 may have a value of "10000010."

According to an embodiment, the control device 220 may generate at least one second packet. Each of at least one second packet may include the first information 510, the second information 520, and the third information 530.

According to an embodiment, the number of the second packets may be determined according to the network connection information. In the following description, the length of the third information 530 will be described as an example of being 22 bytes, but the length of the packet may vary. For example, referring to FIG. 5, since a maximum length of data that can be expressed in one packet is 18 bytes of the third information, two packets may be generated to transmit a network identifier (e.g., 0x41 0x50 0x01 0x1A 0x34 0x35 ...0x38) having a length of 32 bytes. Further, four packets may be generated to transmit a network password having a length of 64 bytes.

According to an embodiment, in operation 314, the control device 220 may sequentially transmit at least one second packet generated in operation 312 to the IoT device 210. For example, the control device 220 may transmit at least one second packet to the IoT device 210 in a unicast, multicast, or broadcast manner.

According to an embodiment, in operation 316, the IoT device 210 may transmit a network connection request to a new AP based on the second packet received from the control device 220. In various embodiments of the disclosure, the AP to which the IoT device 210 is already connected may be referred to as a first AP (or old AP), and the AP to which the IoT device 210 is to be newly connected may be referred to as a second AP (or new AP).

According to an embodiment, the IoT device 210 may decrypt at least one second packet received from the control device 220 by using a secret key. The IoT device 210 may identify the network connection information via the decryption and may transmit a network connection request to the new AP based on the network connection information. In case the IoT device 210 cannot perform the decryption of the second packet based on the secret key, the IoT device 210 cannot transmit the network connection request to the new AP.

According to an embodiment, in case the control device 220 receives a signal regarding network reconnection from the new AP or the IoT device 210, the control device 220 may identify that the IoT device 210 has been reconnected to the network. For example, in case the control device 220 receives information indicating that the IoT device is connected from an IoT server (e.g., the IoT server 240) via the AP, the control device 220 may identify that the IoT device 210 has been reconnected to the network. For example, in case a reconnection request indicator (e.g., AP Connection request) included in device status information of a packet received by the control device 220 from the IoT device indicates that the IoT device does not need reconnection, the control device 220 may identify that the IoT device 210 has been reconnected to the network.

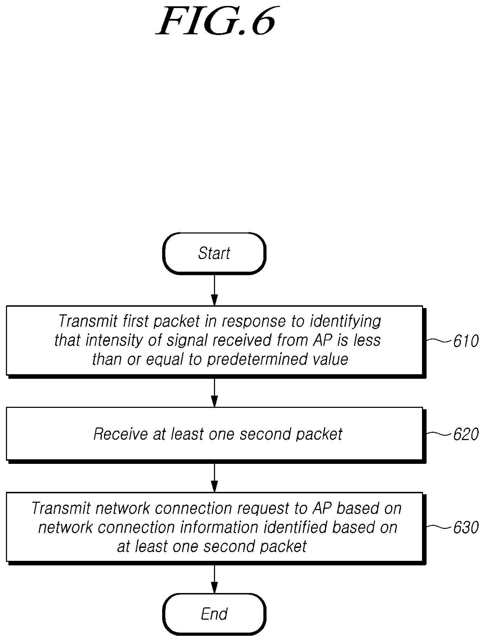

FIG. 6 illustrates an operation flow of an electronic device according to an embodiment. The electronic device of FIG. 6 may include a device corresponding to the IoT device 210.

In the embodiment of FIG. 6, the AP to which the electronic device (e.g., the IoT device 210) is already connected may be referred to as the first AP (or old AP), and the AP to which the electronic device (e.g., the IoT device 210) is to be newly connected may be referred to as the second AP (or new AP).

According to an embodiment, in operation 610, the electronic device may transmit the first packet in response to identifying that the intensity of a signal received from the first AP (or, old AP) is less than or equal to a predetermined value.

According to an embodiment, the electronic device may monitor whether an intensity of a reference signal (e.g., the RSSI) is less than or equal to a predetermined value.

According to an embodiment, the electronic device may monitor whether reconnection of the AP is needed. In case the electronic device cannot receive a signal from the first AP (e.g., in case a reference signal is not received for a predetermined time) or in case an intensity of the signal received from the first AP is less than or equal to a predetermined value (e.g., in case an intensity of the received reference signal is less than or equal to a predetermined value), the electronic device may determine that AP reconnection is needed.

According to an embodiment, the electronic device may identify that the intensity of a signal received from the first AP is less than or equal to a first threshold value. In case a position of the first AP or the electronic device is changed and moved to a position where they cannot exchange signals with each other, or the first AP is changed (e.g., the network connection information is changed), the electronic device may not receive a reference signal from the first AP. Alternatively, the intensity of a signal received by the electronic device from the first AP may decrease to be less than or equal to a predetermined value.

According to an embodiment, in case the electronic device cannot receive a reference signal from the first AP for a predetermined time or longer (including a case where the period of time the intensity of the reference signal remains at or below a predetermined value is greater than or equal to a predetermined time), the electronic device may determine that AP reconnection is needed. Since it is not necessary to perform the reconnection of the AP and the electronic device in a case where a signal is not received due to temporary interference between the AP and the electronic device, the electronic device may determine that reconnection of the AP and the electronic device is needed (a change of the AP is needed) in case where the period of time during which the reference signal is not received, or is weakly received equals or exceeds a predetermined time.

According to an embodiment, the electronic device may generate a first packet. The first packet may include the BLE advertising packet.

According to an embodiment, the electronic device may generate the first packet in response to identifying that an intensity of the reference signal is less than or equal to a predetermined value.

According to an embodiment, the first packet may include the BLE advertising packet. The BLE advertising packet may include various pieces of information about the first AP, the electronic device, the network, and/or a surrounding channel environment.

According to an embodiment, the first packet may include packet version information, connection history information (onboarding information), device information, and/or device status information 420.

According to an embodiment, the connection history information may include information about the connection history of the first AP and the electronic device. For example, the connection history information may include information about a time point at which the electronic device is connected to a network via the first AP, an identifier (e.g., SSID) of the network, and/or a network password.

According to an embodiment, the device status information may include information about the connection status of the device. For example, the device status information may include a network connection request indicator (e.g., AP connection required) indicating whether the electronic device needs connection to the network. The network connection request indicator may indicate that connection to the network is needed or indicate that connection to the network is not needed.

According to an embodiment, the first packet may include device identification information (e.g., device identification information 430). For example, the first packet may include device identification information including all or part of a serial number of the electronic device.

According to an embodiment, the electronic device may, in response to generating the first packet, transmit the generated first packet to the control device.

According to an embodiment, in operation 620, the electronic device may receive at least one second packet from an external device (e.g., the control device 220). Operation 620 may include all contents according to operations 310, 312, and 314 of FIG. 3.

According to an embodiment, the second packet may include network connection information. The network connection information may include a network identifier (e.g., SSID) and/or a network password. The second packet and/or the network connection information included in the second packet may be encrypted via a secret key.

According to an embodiment, the second packet may include first information (e.g., the first information 510), second information (e.g., the second information 520), and/or third information (e.g., the third information 530).

According to an embodiment, the first information may include a network connection information indicator. The network connection information indicator may indicate any one of a network identifier or a network password.

According to an embodiment, the second information may include information about the length of the network connection information.

According to an embodiment, the third information may include network data. The network data may include an actual data value (e.g., at least a part of network identifier data or network password data).

According to an embodiment, the first information may include a value indicating an order of packets. For example, in case the packet includes information about the network identifier and is a first packet, the first information may have a value of "00000001." For example, in case the packet includes information about the network identifier and is a second packet, the first information may have a value of "00000010." For example, in case the packet includes information about the network password and is a first packet, the first information may have a value of "10000001." For example, in case the packet includes information about the network password and is a second packet, the first information may have a value of "10000010."

According to an embodiment, the number of second packets may be determined according to the network connection information.

According to an embodiment, an external device (e.g., the control device 220) may sequentially transmit at least one second packet to the electronic device.

According to an embodiment, at least one second packet may be transmitted from an external device (e.g., the control device 220) to the electronic device in a unicast, multicast, or broadcast manner.

According to an embodiment, in operation 630, the electronic device may transmit a network connection request to the second AP (or new AP) based on network connection information identified based on at least one second packet.

According to an embodiment, the electronic device may transmit a network connection request to the second AP based on the second packet received from the external device (e.g., the control device 220).

According to an embodiment, the electronic device may decrypt at least one second packet received from the external device (e.g., the control device 220) by using the secret key. The electronic device may identify the network connection information via the decryption, and based on this, may transmit the network connection request to the second AP. In the event that the electronic device cannot perform decryption of the second packet based on the secret key, the electronic device cannot transmit the network connection request to the second AP.

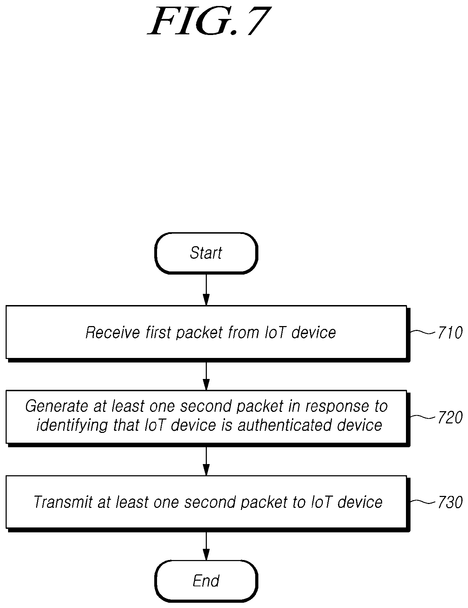

FIG. 7 illustrates an operation flow of the control device according to an embodiment. The control device of FIG. 7 may include the control device 220 of FIG. 2. In addition, the IoT device of FIG. 7 may include the IoT device 210 of FIG. 2 and the electronic device of FIG. 6.

According to an embodiment, in operation 710, the control device may receive a first packet from the IoT device. Operation 710 may include all of operation 308 of FIG. 3 and the operation contents of the IoT device 210 related to the generation of the first packet.

According to an embodiment, in operation 720, the control device may generate at least one second packet, in response to identifying that the IoT device is an authenticated device.

According to an embodiment, the control device may determine whether the IoT device is an authenticated device. The operation of determining whether it is an authenticated device may include an operation of determining whether it is a device that is connected to the same network as the control device and which can be controlled by the control device.

According to an embodiment, although not illustrated in the drawings, the control device may perform connection with the AP. In case reconnection between the IoT device and the AP is needed due to a movement of the position of the AP, a separate connection between the control device and the AP may not be needed, but in case the AP itself is changed (e.g., a change of the network), a connection process between the control device and the AP may be performed in advance.

According to an embodiment, although not illustrated in the drawings, the control device may determine whether the IoT device is a device that has been previously connected, based on connection history information (e.g., the connection history information 410 of FIG. 4) included in the first packet (e.g., the first packet 400 of FIG. 4) received from the IoT server or the AP. The connection history information may include information about a device that is being connected or has been connected to the network via the first AP.

According to an embodiment, the control device may determine whether reconnection of the IoT device is needed based on the first packet. In case the first packet includes information indicating that the IoT device needs reconnection to the AP (e.g., the network connection request indicator of the device status information), it may be determined that reconnection of the IoT device is needed.

According to an embodiment, the control device may determine whether the IoT device is an authenticated device based on the first packet. For example, the control device may determine whether the IoT device is an authenticated device based on whether the serial number of the device included in the first packet is stored in the control device 220 or the IoT server (e.g., the IoT server 240). In case the first packet includes device identification information of the IoT device, the control device may determine that the IoT device is an authenticated device. In case the first packet does not include the device identification information of the IoT device, the control device may determine that the IoT device is a non-authenticated device.

According to an embodiment, the control device may generate network connection information. The control device may generate the network connection information for the IoT device, in response to identifying that the IoT device is an authenticated device.

According to an embodiment, the network connection information may include a network identifier (e.g., SSID) and/or a network password.

According to an embodiment, the control device may generate encrypted network connection information. The second packet and/or the network connection information, included in the second packet, may be encrypted via the secret key.

According to an embodiment, the IoT device may receive the secret key from the network in case it is connected to the network for the first time. The IoT device may be connected to the network via the AP, before transmitting the first packet. After the IoT device is connected to the network via the AP, the IoT device may receive the secret key from the network. In other words, the secret key may include a value exchanged at a specific point in time after the connection between the IoT device and the network.

According to an embodiment, the second packet may include first information (e.g., the first information 510), second information (e.g., the second information 520), and/or third information (e.g., the third information 530).

According to an embodiment, the first information may include a network connection information indicator. The network connection information indicator may indicate either the network identifier or the network password. For example, referring to Table 1, in case the network connection information indicator of the second packet has a value of "0," the network connection information of the second packet may be identified as the network identifier (e.g., mySSidIsNewAP). In case the network connection information indicator of the second packet has a value of "1," the network connection information of the second packet may include the network password (e.g., myPasswordIsNewPassowrd).

According to an embodiment, the control device may encrypt the network connection information by using the secret key (e.g., AES 256, CBC) to obtain an encrypted hex value.

According to an embodiment, the second information may include information about the length of the network connection information. For example, the encrypted network identifier may have a length of 32 bytes, and the second information may include information about the length of 32 bytes.

According to an embodiment, the third information may include network data. The network data may include an actual data value. For example, the third information may include actual data values (e.g., at least a portion of network identifier data or network password data).

According to an embodiment, the control device may generate the second packet. The second packet may include the generated network connection information (e.g., the first information, the second information, and the third information).

According to an embodiment, the first information may include a value indicating an order of the packet. For example, in case the packet includes information about the network identifier and is the first packet, the first information may have a value of "00000001." For example, in case the packet includes information about the network identifier and is the second packet, the first information may have a value of "00000010." For example, in case the packet includes information about the network password and is the first packet, the first information may have a value of "10000001." For example, in case the packet includes information about the network password and is the second packet, the first information may have a value of "10000010."

According to an embodiment, the control device may generate at least one second packet. Each of at least one packet may include the first information, the second information, and/or the third information.

According to an embodiment, several of the second packets may be determined according to the network connection information.

According to an embodiment, in operation 730, the control device may transmit at least one second packet to the IoT device. Operation 730 may include all of the operation contents of operation 314 of FIG. 3.

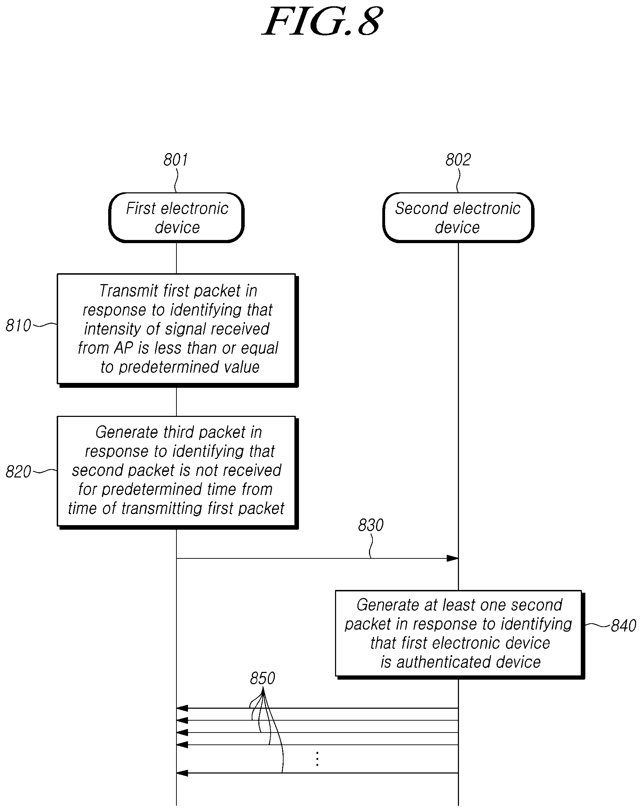

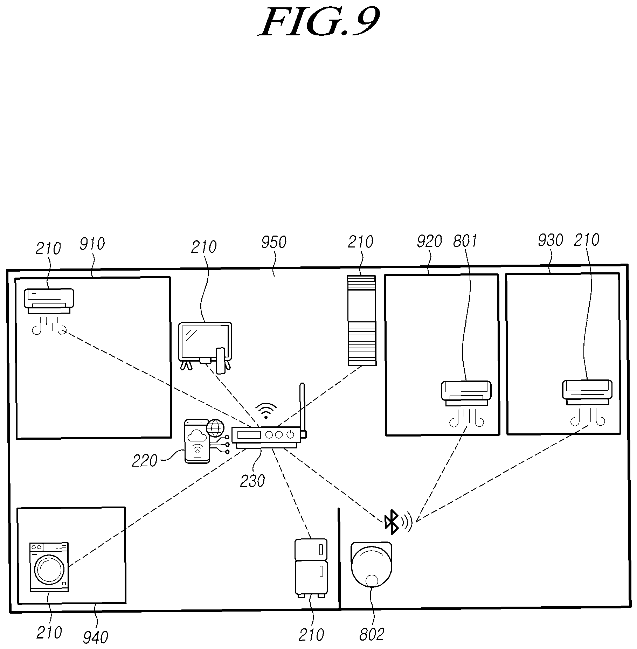

FIG. 8 illustrates a signaling flow of a first electronic device and a second electronic device according to an embodiment. FIG. 9 illustrates an example of a network environment according to an embodiment. FIG. 8 may include all of the contents described in the embodiments of FIGS. 3 to 7. FIG. 8 relates to an operation flow in case an IoT device disconnected from the network does not receive a second packet from the control device even though the IoT device has transmitted a first packet to the control device. The first electronic device 801 of FIG. 8 may include a device corresponding to the IoT device 210. The second electronic device 802 may include another IoT device that has received network connection information from the first electronic device.

According to an embodiment, in operation 810, the first electronic device 801 may transmit the first packet to the control device, in response to identifying that the intensity of a signal received from the AP is less than or equal to a predetermined value. For example, the first electronic device 801 may transmit the first packet to the control device in a unicast, multicast, or broadcast manner. Operation 810 may include all of the operation contents of operation 302, operation 304, and operation 306 of FIG. 3.

According to an embodiment, in operation 820, the first electronic device 801 may generate a third packet, in response to identifying that the second packet has not been received from the control device for a predetermined time from a point in time when the first packet was transmitted. In case the position of the first electronic device 801 moves to a position where communication with the control device 220 and/or the AP 230 is difficult, the first packet transmitted by the first electronic device 801 may not reach the control device. Operation 820 may include an operation for the first electronic device 801 to determine to request the network connection information to another IoT device that has received the third packet, other than the control device.

Referring to FIG. 9, a network environment 900 may include a plurality of IoT devices 210, an AP 230, and a control device 220 disposed in a first area 910, a second area 920, a third area 930, a fourth area 940, and a fifth area 950 (e.g., a living room). Unlike the second electronic device 802, the first electronic device 801 is located in the second area 920, and because an obstacle (e.g., a wall) existing between the second area 920 and the AP 230 and the control device 220, the first electronic device 801 may have difficulty receiving signals from the AP 230 and the control device 220. In such a case, the first electronic device 801 may transmit a third packet for requesting network connection information to the second electronic device 802, which is another adjacent IoT device, instead of the control device 220.

According to an embodiment, the third packet may include all operation contents included in the first packet. Further, the third packet may include an indicator indicating that the first electronic device 801 requests network connection information from another IoT device (e.g., the second electronic device 802).

According to an embodiment, the third packet may be the same packet as the first packet.

According to an embodiment, in operation 830, the first electronic device 801 may transmit the generated third packet to the second electronic device 802.

According to an embodiment, the first electronic device 801 may transmit the third packet to the adjacent second electronic device 802 in a unicast, multicast, or broadcast manner.

According to an embodiment, in operation 840, in response to identifying that the first electronic device 801 is an authenticated device, the second electronic device 802 may generate at least one second packet. Operation 840 may include all operation contents of operation 310 and operation 312 of FIG. 3.

According to an embodiment, in operation 850, the second electronic device 802 may transmit at least one second packet to the first electronic device 801. Operation 850 may include all operation contents according to operation 314 of FIG. 3.

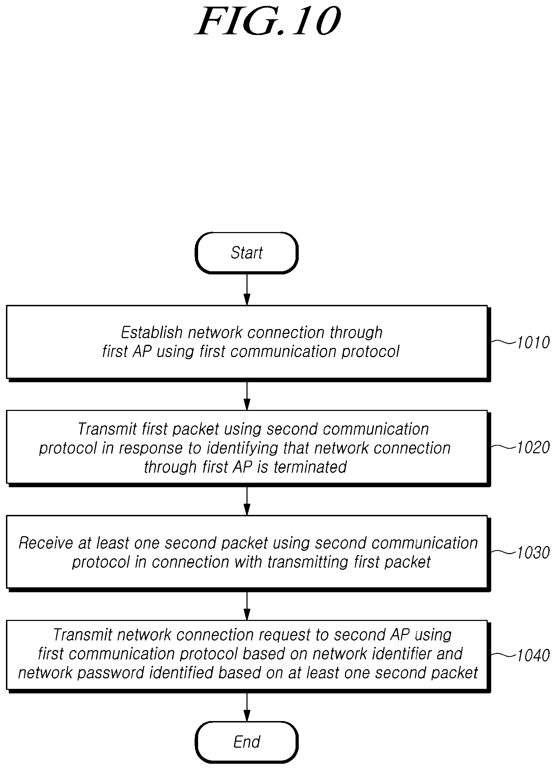

FIG. 10 illustrates an operation flow of an electronic device according to an embodiment. The electronic device of FIG. 10 may include a device corresponding to the IoT device 210.

The embodiment of FIG. 10 may be an example of the embodiment of FIG. 6. The descriptions above in the embodiment of FIG. 6 may be applied to the embodiment of FIG. 10, provided that they do not contradict each other.

In the embodiment of FIG. 10, an AP to which the electronic device (e.g., the IoT device 210) is previously connected may be referred to as a first AP (or old AP), and an AP to which the electronic device (e.g., the IoT device 210) intends to establish a new connection may be referred to as a second AP (or new AP).

According to an embodiment, the electronic device may include memory storing instructions that, in case executed by a processor, cause the electronic device to perform at least one of the following operations.

According to an embodiment, in operation 1010, the electronic device may establish a network connection via the first AP using a first communication protocol. The first communication protocol may be, for example, a Wi-Fi communication protocol.

According to an embodiment, in operation 1020, in response to identifying that the network connection via the first AP is terminated, the electronic device may transmit a first packet (e.g., the first packet 400 of FIG. 4) using a second communication protocol. The second communication protocol may be, for example, a BLE communication protocol.

According to an embodiment, the first packet may include identification information of the electronic device and a network connection request indicator.

According to an embodiment, in operation 1030, in connection with transmitting the first packet, the electronic device may receive at least one second packet (e.g., the second packet 500 of FIG. 5) using the second communication protocol.

According to an embodiment, at least one second packet may include network connection information corresponding to a network identifier and/or a network password associated with a second AP and may be encrypted using an encryption key (e.g., a secret key).

According to an embodiment, in operation 1040, the electronic device may transmit a network connection request to the second AP using the first communication protocol, based on the network identifier and the network password that are identified based on at least one second packet.

According to an embodiment, the electronic device may perform decryption on at least one second packet using the encryption key to identify the network identifier and the network password and may transmit the network connection request to the second AP based on the network identifier and the network password.

According to an embodiment, at least one second packet may include information indicating an order of a packet and a network connection information indicator. In case the network connection information indicator indicates the network identifier, at least one second packet may include information about the length of the network identifier and data constituting the network identifier. In case the network connection information indicator indicates the network password, at least one second packet may include information about the length of the network password and data constituting the network password.

According to an embodiment, the electronic device may measure the RSSI of a signal received from the first AP, identify that the measured RSSI is less than or equal to a predetermined value, and in response to identifying that a signal greater than or equal to the predetermined value is not received from the first AP for a predetermined time or longer, transmit the first packet.

According to an embodiment, the signal received from the first AP may include a beacon frame of the AP.

According to an embodiment, at least one second packet is received from a control device, and the control device may include a user device for controlling the electronic device.

According to an embodiment, the electronic device may, in response to identifying that the second packet is not received for at least a predetermined time after transmitting the first packet, cause to transmit a third packet, and the third packet may include a reconnection request indicator.

According to an embodiment, at least one second packet is received from at least one external electronic device, and at least one external electronic device may include a device connected to the AP.

According to an embodiment, the electronic device may, in response to receiving a fourth packet for informing of a change in network connection information, transmit the first packet. The fourth packet may include an indicator to inform of the change in the network connection information.

According to an embodiment, the first packet may include a BLE advertising packet.

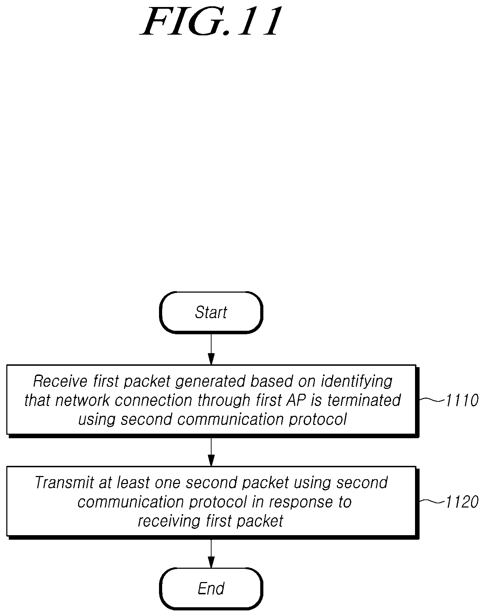

FIG. 11 illustrates an operation flow of an electronic device according to an embodiment. The electronic device of FIG. 11 may include the control device 220 of FIG. 2. The external electronic device of FIG. 11 may include the IoT device 210 of FIG. 2 and the electronic device of FIG. 6.

The embodiment of FIG. 11 may be an example of the embodiment of FIG. 7. The descriptions above in the embodiment of FIG. 7 may be applied to the embodiment of FIG. 11, provided that they do not contradict each other.

In the embodiment of FIG. 11, an AP to which the external electronic device (e.g., the IoT device 210) is previously connected may be referred to as a first AP (or old AP), and an AP to which the external electronic device (e.g., the IoT device 210) intends to newly connect may be referred to as a second AP (or new AP).

According to an embodiment, the electronic device may include memory storing instructions that, in case executed by a processor, cause the electronic device to perform at least one of the following operations.

According to an embodiment, in operation 1110, the electronic device may receive a first packet (e.g., the first packet 400 of FIG. 4) generated based on identifying that the network connection via the first AP is terminated, using the second communication protocol. The first packet may be generated by the external electronic device based on identifying that the network connection via the first AP is terminated, and the electronic device may receive the first packet from the external electronic device.

According to an embodiment, the first packet may include identification information of the electronic device and a network connection request indicator. According to an embodiment, the first packet may include a BLE advertising packet.

According to an embodiment, the external electronic device may be an electronic device for which a network connection has been established via the first AP using the first communication protocol. The first communication protocol may be, for example, a Wi-Fi communication protocol.

According to an embodiment, the second communication protocol may be, for example, a BLE communication protocol.

According to an embodiment, in operation 1120, the electronic device may transmit at least one second packet (e.g., the second packet 500 of FIG. 5) using the second communication protocol, in response to receiving the first packet. According to an embodiment, at least one second packet may include network connection information corresponding to a network identifier and/or a network password associated with the second AP and may be encrypted using an encryption key (e.g., a secret key).

According to an embodiment, at least one second packet includes information indicating the order of the packets and a network connection information indicator. In case the network connection information indicator indicates the network identifier, at least one second packet includes information about the length of the network identifier and data constituting the network identifier. In case the network connection information indicator indicates the network password, at least one second packet may include information about the length of the network password and data constituting the network password.

According to an embodiment, the external electronic device may transmit a network connection request to the second AP using the first communication protocol, based on the network identifier and the network password that are identified based on at least one second packet.

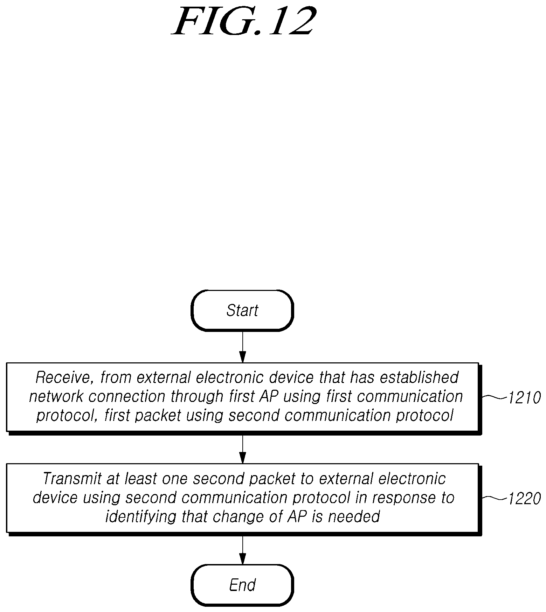

FIG. 12 illustrates an operation flow of an electronic device according to an embodiment. The electronic device of FIG. 12 may include the control device 220 of FIG. 2. The external electronic device of FIG. 12 may include the IoT device 210 of FIG. 2 and the electronic device of FIG. 6.

In the embodiment of FIG. 12, descriptions overlapping with those described above in the embodiments of FIGS. 1 to 11 are omitted.

In the embodiment of FIG. 12, an AP to which the external electronic device (e.g., the IoT device 210) is previously connected may be referred to as a first AP (or an old AP), and an AP to which the external electronic device (e.g., the IoT device 210) is to newly connect may be referred to as a second AP (or a new AP).

According to an embodiment, the electronic device may include a memory storing instructions that, in case executed by a processor, cause the electronic device to perform at least one of the following operations.

According to an embodiment, in operation 1210, the electronic device may receive a first packet (e.g., the first packet 400 of FIG. 4) using the second communication protocol from the external electronic device for which a network connection has been established via the first AP using the first communication protocol. The first communication protocol may be, for example, a Wi-Fi communication protocol. The second communication protocol may be, for example, a BLE communication protocol.

According to an embodiment, the first packet may include identification information of the electronic device and a network connection request indicator. According to an embodiment, the first packet may include a BLE advertising packet.

According to an embodiment, in operation 1220, the electronic device may transmit at least one second packet (e.g., the second packet 500 of FIG. 5) to the external electronic device using the second communication protocol, in response to identifying that a change of the AP is needed.

According to an embodiment, the electronic device may identify that a change of the AP is needed, in case the electronic device identifies that the AP has changed from the first AP to the second AP.

According to an embodiment, the electronic device may identify that a change of the AP is needed, even in case the first AP is maintained but a network connection between the external electronic device and the second AP needs to be established.

According to an embodiment, at least one second packet may include network connection information corresponding to a network identifier and/or a network password associated with the second AP and may be encrypted using an encryption key (e.g., a secret key).

According to an embodiment, at least one second packet includes information indicating the order of the packets and a network connection information indicator. In case the network connection information indicator indicates the network identifier, at least one second packet includes information about the length of the network identifier and data constituting the network identifier. In case the network connection information indicator indicates the network password, at least one second packet may include information about the length of the network password and/or data constituting the network password.

According to an embodiment, the external electronic device may transmit a network connection request to the second AP using the first communication protocol, based on the network identifier and the network password that are identified based on at least one second packet.

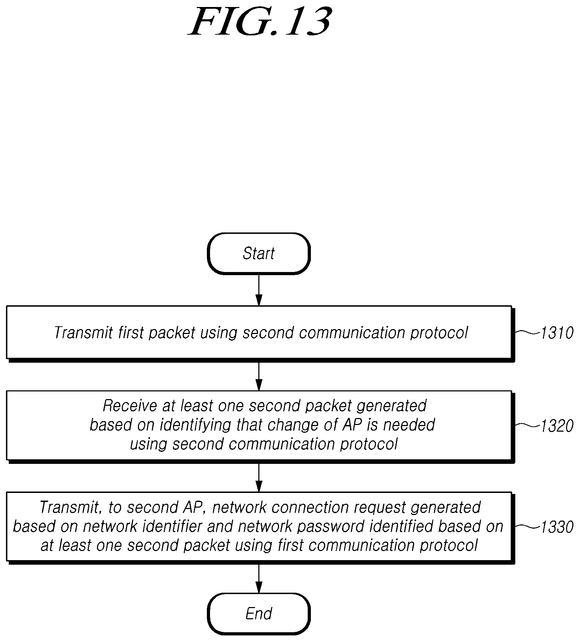

FIG. 13 illustrates an operation flow of an electronic device according to an embodiment. The electronic device of FIG. 13 may include a device corresponding to the IoT device 210.

In the description of FIG. 13, descriptions overlapping with those described above in the embodiments of FIGS. 1 to 12 are omitted.

In the embodiment of FIG. 13, an AP to which the electronic device (e.g., the IoT device 210) is previously connected may be referred to as a first AP (or an old AP), and an AP to which the electronic device (e.g., the IoT device 210) is to newly connect may be referred to as a second AP (or a new AP).

According to an embodiment, the electronic device may include a memory storing instructions that, in case executed by a processor, cause the electronic device to perform at least one of the following operations.

According to an embodiment, the electronic device may be an electronic device for which a network connection has been established via the first AP using the first communication protocol. The first communication protocol may be, for example, a Wi-Fi communication protocol.

According to an embodiment, in operation 1310, the electronic device may transmit a first packet (e.g., the first packet 400 of FIG. 4) using the second communication protocol. The second communication protocol may be, for example, a BLE communication protocol.

According to an embodiment, in operation 1320, the electronic device may receive at least one second packet (e.g., the second packet 500 of FIG. 5) generated based on identifying that a change of the AP is needed, using the second communication protocol. At least one second packet may be generated by the external electronic device (e.g., the control device 200 of FIG. 2) in response to identifying that a change of the AP is needed, and the electronic device may receive at least one second packet from the external electronic device.

According to an embodiment, the external electronic device may identify that a change of the AP is required, in case the external electronic device identifies that the AP has changed from the first AP to the second AP.

According to an embodiment, the external electronic device may identify that the change of the AP is required, even in case where the first AP is maintained but a network connection needs to be established between the external electronic device and the second AP.

According to an embodiment, at least one second packet may include network connection information corresponding to a network identifier and/or a network password associated with the second AP and may be encrypted using an encryption key (e.g., a secret key).

According to an embodiment, at least one second packet includes information indicating the order of the packets and a network connection information indicator. In case the network connection information indicator indicates the network identifier, at least one second packet includes information about the length of the network identifier and data constituting the network identifier. In case the network connection information indicator indicates the network password, at least one second packet may include information about the length of the network password and/or data constituting the network password.

According to an embodiment, in operation 1330, the electronic device may transmit, to the second AP, a network connection request generated based on a network identifier and/or a network password identified based on at least one second packet, using the first communication protocol.

According to embodiments of the disclosure, for the connection between an AP and IoT devices, the same task is not required to be serially performed for each of the IoT devices but may be simultaneously and parallelly performed. In other words, since time does not increase according to the number of IoT devices, an AP recovery operation is possible within a short time.

An electronic device (e.g., the IoT device 210 or the first electronic device 801) according to an embodiment of the disclosure may comprise a communication unit, a memory, and a processor electrically connected to the communication unit and the memory. The processor may be configured to: in response to identifying that a signal is not received from a first AP (or an old AP) (e.g., the AP 230) or that the intensity of a signal received from the first AP is less than or equal to a predetermined value, transmit a first packet (e.g., the first packet 400), receive at least one second packet (e.g., the second packet 500), and transmit a network connection request to a second AP (or a new AP) based on a network identifier and a network password identified based on at least one second packet, wherein the first packet includes identification information of the electronic device (e.g., the device identification information 430) and a network connection request indicator (e.g., a network connection request indicator of the device status information 420), at least one second packet is encrypted using a secret key, at least one second packet includes a network connection information indicator, and the network connection information indicator may indicate any one of the network identifier or the network password.

According to an embodiment, the processor may be configured to perform decryption on at least one second packet using the secret key to identify the network identifier and the network password and transmit a request for connection with the network to the first AP based on the network identifier and the network password.

According to an embodiment, at least one second packet may include information indicating an order of packets, and in case the network connection information indicator indicates the network identifier, at least one second packet may include the length of the network identifier and information about bits constituting the network identifier, and in case the network connection information indicator indicates the network password, at least one second packet may include a length of the network password and information about bits constituting the network password.

According to an embodiment, the processor may be configured to measure the RSSI of the signal received from the first AP, identify that the RSSI is less than or equal to the predetermined value, and in response to identifying that a signal greater than or equal to the predetermined value is not received from the first AP for at least a predetermined time , transmit the first packet.

According to an embodiment, the signal received from the first AP may include a beacon frame of the first AP.

According to an embodiment, at least one second packet is received from a control device, and the control device may include a user device for controlling the electronic device.

According to an embodiment, the processor may be configured to, in response to identifying that the second packet is not received for a predetermined time or longer after transmitting the first packet, transmit a third packet, and the third packet may include a reconnection request indicator.

According to an embodiment, at least one second packet is received from at least one external electronic device, and at least one external electronic device may include a device connected to the AP.

According to an embodiment, the processor may be configured to, in response to receiving a fourth packet for informing of a change of network connection information, transmit the first packet, and the fourth packet may include an indicator informing of the change of the network connection information.

According to an embodiment, the first packet may include a BLE advertising packet.

A method of operating an electronic device (e.g., the IoT device 210 or the first electronic device 801) according to an embodiment of the disclosure may comprise: in response to identifying that a signal is not received from a first AP (or an old AP) (e.g., the AP 230) or that the intensity of a signal received from the first AP is less than or equal to a predetermined value, transmitting a first packet (e.g., the first packet 400), receiving at least one second packet (e.g., the second packet 500), and/or transmitting a network connection request to the second AP (or, a new AP) based on a network identifier and a network password identified based on at least one second packet, wherein the first packet includes identification information of the electronic device (e.g., the device identification information 430) and/or a network connection request indicator (e.g., a network connection request indicator of the device status information 420), at least one second packet is encrypted using a secret key, at least one second packet includes a network connection information indicator, and the network connection information indicator may indicate any one of the network identifier or the network password.

According to an embodiment, the method of operating the electronic device may comprise performing decryption on at least one second packet using the secret key to identify the network identifier and the network password, and/or transmitting a request for connection with the network to the first AP based on the network identifier and the network password.

According to an embodiment, at least one second packet may include information indicating an order of packets, and in case the network connection information indicator indicates the network identifier, at least one second packet may include the length of the network identifier and information about bits constituting the network identifier, and in case the network connection information indicator indicates the network password, at least one second packet may include the length of the network password and information about bits constituting the network password.

According to an embodiment, the method of operating the electronic device may comprise measuring a RSSI of the signal received from the first AP, identifying that the RSSI is less than or equal to the predetermined value, and/or in response to identifying that a signal greater than or equal to the predetermined value is not received from the first AP for a predetermined time or longer, transmitting the first packet.

According to an embodiment, the signal received from the first AP may include a beacon frame of the first AP.

According to an embodiment, in the method of operating the electronic device, at least one second packet is received from a control device, and the control device may include a user device for controlling the electronic device.

According to an embodiment, the method of operating the electronic device may comprise, in response to identifying that the second packet is not received for a predetermined time or longer after transmitting the first packet, transmitting a third packet, and the third packet may include a reconnection request indicator.

According to an embodiment, at least one second packet is received from at least one external electronic device, and at least one external electronic device may include a device connected to the AP.

According to an embodiment, the method of operating the electronic device may comprise, in response to receiving a fourth packet for informing of a change of network connection information, transmitting the first packet, and the fourth packet may include an indicator informing of the change of the network connection information.

According to an embodiment, the first packet may include a BLE advertising packet.

The electronic device according to various embodiments disclosed in the disclosure may include a device in various forms. The electronic device may include, for example, a display device, a portable communication device (e.g., a smartphone), a computer device, a portable multimedia device, a portable medical appliance, a camera, a wearable device, or a home appliance. The electronic device according to the embodiments of the disclosure is not limited to the above-described devices.

The various embodiments of the disclosure and the terms used therein are not intended to limit the technical features described in the disclosure to specific embodiments, and should be understood to include various changes, equivalents, or substitutes of the corresponding embodiments. For example, the singular forms of a component should be understood as a concept including a plurality of components, unless the context clearly dictates the singular only. As used herein, the term "and/or" should be understood to encompass any and all possible combinations of one or more of the listed items. As used in the disclosure, the terms "comprise," "have," "be configured of," and the like are merely intended to designate the presence of the features, components, parts, or combinations thereof described in the disclosure, and are not intended to exclude the possibility of the presence or addition of one or more other features, components, parts, or combinations thereof by use of such terms. As used herein, each of phrases such as "A or B," "at least one of A and B," "at least one of A or B," "A, B or C," "at least one of A, B and C," and "at least one of A, B, or C" may include any one of the items listed together in the corresponding one of the phrases, or all possible combinations thereof. Terms such as "first", "second", or "first" or "second" may simply be used to distinguish a corresponding component from another corresponding component, and do not limit the corresponding components in another aspect (e.g., importance or order).

The term "unit" or "module" used in the various embodiments of the disclosure may include a unit implemented in hardware, software, or firmware, and may be used interchangeably with terms such as, for example, logic, logic block, component, or circuit. The "unit" or "module" may be a part integrally configured or a minimum unit of the part or a portion thereof that performs one or more functions. For example, according to an embodiment, the "unit" or "module" may be implemented in the form of an application-specific integrated circuit (ASIC).

The term "when" used in the various embodiments of the disclosure may be interpreted to mean "upon," or "at the time," or "in response to determining," or "in response to detecting" depending on the context. Similarly, "in case it is determined that" or "in case it is detected that" may be interpreted to mean "upon determination," or "in response to determining," or "upon detection," or "in response to detecting" depending on the context.

A program executed by the device (e.g., the IoT device 210, the control device 220, the AP 230, the IoT server 240, the first electronic device 801, or the second electronic device 802) described throughout the disclosure may be implemented as a hardware component, a software component, and/or a combination of a hardware component and a software component. The program may be performed by any system capable of performing computer-readable instructions.

The software may include a computer program, a code, an instruction, or a combination of one or more thereof, and may configure a processing device to operate as desired or instruct the processing device independently or collectively. The software may be implemented as a computer program including instructions stored in computer-readable storage media. Examples of computer-readable storage media include magnetic storage media (e.g., a read-only memory (ROM), a random-access memory (RAM), a floppy disk, a hard disk, etc.) and optical reading media (e.g., a compact disc read-only memory (CD-ROM), a digital versatile disc (DVD)). The computer-readable storage medium may be distributed over computer systems connected via a network, so that the computer-readable code may be stored and executed in a distributed manner. The computer program may be distributed online (e.g., downloaded or uploaded), either via an application store (e.g., Play Store(TM)) or directly between two user devices (e.g., smartphones). In the case of online distribution, at least a part of the computer program product may be at least temporarily stored or temporarily generated in a machine-readable storage medium such as a memory of a manufacturer's server, a server of an application store, or a relay server.

According to various embodiments, each component (e.g., a module or a program) of the above-described components may include a singular or plural entity, and some of the plurality of entities may be separately disposed in another component. According to various embodiments, one or more components or operations of the above-described corresponding components may be omitted, or one or more other components or operations may be added. Alternatively or additionally, a plurality of components (e.g., a module or a program) may be integrated into a single component. In such a case, the integrated component may perform one or more functions of each component of the plurality of components identically or similarly to those performed by the corresponding component of the plurality of components before the integration. According to various embodiments, operations performed by a module, a program, or other component may be executed sequentially, in parallel, repeatedly, or heuristically, or one or more of the operations may be executed in a different order, or omitted, or one or more other operations may be added.

## Claims

1. An electronic device, comprising:
at least one communication circuit;
at least one processor; and
memory storing instructions, when executed by the at least one processor, that cause the electronic device to:
establish a network connection via a first access point (AP) using a first communication protocol,
in response to identifying that the network connection via the first AP is terminated, transmit a first packet using a second communication protocol,
receive at least one second packet using the second communication protocol in connection with transmitting the first packet, and
transmit a network connection request to a second AP using the first communication protocol, based on a network identifier and a network password that are identified based on the at least one second packet,
wherein the first packet includes at least one of identification information of the electronic device or a network connection request indicator, and
wherein the at least one second packet includes network connection information corresponding to the network identifier and/or the network password associated with the second AP, and is encrypted using an encryption key.

2. The electronic device of claim 1, wherein the instructions, when executed by the at least one processor, cause the electronic device to:
perform decryption on the at least one second packet using the encryption key to identify the network identifier and the network password, and
transmit the network connection request to the second AP based on the network identifier and the network password.

3. The electronic device of claim 1 or 2,
wherein the at least one second packet includes at least one of information indicating an order of a packet or a network connection information indicator,
wherein in case the network connection information indicator indicates the network identifier, the at least one second packet includes at least one of information about a length of the network identifier or data constituting the network identifier, and
wherein in case the network connection information indicator indicates the network password, the at least one second packet includes at least one of information about a length of the network password or data constituting the network password.

4. The electronic device of any one of claims 1 to 3, wherein the instructions, when executed by the at least one processor, cause the electronic device to:
measure a received signal strength indicator (RSSI) of a signal received from the first AP,
identify that the measured RSSI is less than or equal to a predetermined value, and
in response to identifying that a signal having an RSSI greater than or equal to the predetermined value is not received from the first AP for a predetermined time or more, transmit the first packet.

5. The electronic device of claim 4, wherein the signal received from the first AP includes a beacon frame of the AP.

6. The electronic device of any one of claims 1 to 5,
wherein the at least one second packet is received from a control device, and
wherein the control device includes a user device for controlling the electronic device.

7. The electronic device of claim 1, wherein the instructions, when executed by the at least one processor, cause the electronic device to:
in response to identifying that the second packet is not received for a predetermined time or more after transmitting the first packet, transmit a third packet, and
wherein the third packet includes a reconnection request indicator.

8. The electronic device of any one of claims 1 to 5 or claim 7,
wherein the at least one second packet is received from at least one external electronic device, and
wherein the at least one external electronic device includes a device connected to the AP.

9. The electronic device of any one of claims 1 to 8, wherein the instructions, when executed by the at least one processor, cause the electronic device to:
in response to receiving a fourth packet for informing of a change of network connection information, transmit the first packet, and
wherein the fourth packet includes an indicator informing of the change of the network connection information.

10. The electronic device of any one of claims 1 to 9, wherein the first packet includes a BLE advertising packet.

11. A method of operating an electronic device, the method comprising:
establishing a network connection via a first access point (AP) using a first communication protocol;
in response to identifying that the network connection via the first AP is terminated, transmitting a first packet using a second communication protocol;
receiving at least one second packet using the second communication protocol in connection with transmitting the first packet; and
transmitting a network connection request to a second AP using the first communication protocol, based on a network identifier and a network password that are identified based on the at least one second packet,
wherein the first packet includes identification information of the electronic device and/or a network connection request indicator, and
wherein the at least one second packet includes at least one of network connection information corresponding to the network identifier or the network password associated with the second AP, and is encrypted using an encryption key.

12. The method of claim 11, further comprising:
performing decryption on the at least one second packet using the encryption key to identify the network identifier and the network password; and
transmitting the network connection request to the second AP based on the network identifier and the network password.

13. The method of claim 11 or 12,
wherein the at least one second packet includes at least one of information indicating an order of a packet or a network connection information indicator,
wherein in case the network connection information indicator indicates the network identifier, the at least one second packet includes at least one of information about a length of the network identifier or data constituting the network identifier, and
wherein in case the network connection information indicator indicates the network password, the at least one second packet includes information about a length of the network password and/or data constituting the network password.

14. The method of any one of claims 11 to 13, further comprising:
measuring a received signal strength indicator (RSSI) of a signal received from the first AP;
identifying that the measured RSSI is less than or equal to a predetermined value; and
in response to identifying that a signal having an RSSI greater than or equal to the predetermined value is not received from the first AP for a predetermined time or more, transmitting the first packet.

15. An electronic device, comprising:
at least one communication circuit;
at least one processor; and
memory storing instructions that, when executed by the at least one processor, cause the electronic device to:
receive, from an external electronic device that has established a network connection via a first access point (AP) using a first communication protocol, a first packet using a second communication protocol, and
in response to identifying that a change of an AP is needed, transmit at least one second packet to the external electronic device using the second communication protocol, wherein the external electronic device is configured to transmit a network connection request to a second AP using the first communication protocol, based on a network identifier and a network password that are identified based on the at least one second packet,
wherein the first packet includes identification information of the electronic device and a network connection request indicator, and
wherein the at least one second packet includes network connection information corresponding to the network identifier and/or the network password associated with the second AP, and is encrypted using an encryption key.
